# EUROPÄISCHE PATENTANMELDUNG

(11) **EP 0 646 497 A1**
(43) Veröffentlichungstag der Anmeldung: **05.04.1995**
(21) Anmeldenummer: 94108387.5
(22) Anmeldetag: 31.05.1994
(51) Int. Cl.: B60R 16/02

(54) **Spiralkabeldose**

(30) Priorität: 04.10.1993 DE 4333807
(71) Anmelder: Klier, Jürgen, 63303 Dreieich (DE)
(72) Erfinder: Klier, Jürgen, D-63303 Dreieich (DE)

(57) **Zusammenfassung**

Spiralkabeldose (20) zur Aufnahme einer Kabelspirale (22), insbesondere einer elektrischen Airbag-Kabelspirale, mit einem ersten Dosenteil und einem zweiten Dosenteil, die relativ zueinander verdrehbar sind und einen ringförmigen Kabelaufnahmeraum einschließen, wobei die Dosenteile Kabeldurchführungen (26, 27) zur Herausführung von in den Kabeldurchführungen gehaltenen Kabelenden (28, 29) der Kabelspirale (22) aus der Dose aufweisen und der Kabelaufnahmeraum radial außenseitig durch eine Außenzylinderwand (25) des ersten Dosenteils und radial innenseitig durch eine Innenzylinderwand (24) des zweiten Dosenteils begrenzt ist, und
einer elastischen Andrückeinrichtung (33) zum Abhalten der Kabelspirale (22) von der Innenzylinderwand (24) mit einer im Bereich der Kabeldurchführung (26) in der Innenzylinderwand (24) auf die Kabelspirale (22) wirkenden Federeinrichtung, wobei die elastische Andrückeinrichtung (33) beidseitig der Kabeldurchführung (26) auf die Kabelspirale (22) wirkend ausgebildet ist.

## Beschreibung

Die Erfindung betrifft eine Spiralkabeldose zur Aufnahme einer Kabelspirale, insbesondere einer elektrischen Airbag-Kabelspirale, mit einem ersten Dosenteil und einem zweiten Dosenteil, die relativ zueinander verdrehbar sind und einen ringförmigen Kabelaufnahmeraum einschließen, wobei die Dosenteile Kabeldurchführungen zur Herausführung von in den Kabeldurchführungen gehaltenen Kabelenden der Kabelspirale aus der Dose aufweisen und der Kabelaufnahmeraum radial außenseitig durch eine Außenzylinderwand des ersten Dosenteils und radial innenseitig durch eine Innenzylinderwand des zweiten Dosenteils begrenzt ist, und einer elastischen Andrückeinrichtung zum Abhalten der Kabelspirale von der Innenzylinderwand mit einer im Bereich der Kabeldurchführung in der Innenzylinderwand auf die Kabelspirale wirkenden Federeinrichtung.

Die in derartigen Spiralkabeldosen aufgenommene Kabelspirale dient zur elektrischen Verbindung zwischen einer Steuereinrichtung und einem Airbag, der im Pralltopf des Fahrzeuglenkrades installiert ist und bekanntlich dazu dient, im Fall einer Kollision einen Aufprallschutz für den Kraftfahrzeuglenker zu schaffen.

Die Anordnung der elektrischen Verbindung zwischen dem Airbag und der Steuereinrichtung in Form einer Kabelspirale läßt dabei Relativbewegungen zwischen dem verdrehbaren Lenkradpralltopf und der am Lenkstock angeordneten feststehenden Steuereinrichtung oder elektrischen Verbinderanordnung zur elektrischen Verbindung des Airbags mit einer Steuereinrichtung zu, ohne die elektrische Verbindung zu gefährden.

Damit die Relativbewegungen von der Kabelspirale möglichst ungehindert ausgeglichen werden können, muß diese so in der Spiralkabeldose angeordnet sein, daß sie sich weitgehend ungehindert auf- und abwickeln kann. Dabei ergibt sich insbesondere bei einer mittleren Lenkradstellung, bei der die Kabelspirale weder vollständig an der Außenzylinderwand noch vollständig an der Innenzylinderwand der Spiralkabeldose anliegt, das Problem des Auftretens von Klappergeräuschen, wenn die Kabelspirale infolge radialen und axialen Spiels innerhalb der Dose hin-und herschlägt.

Um das Entstehen von Klappergeräuschen zu unterdrücken, ist man schon vor längerer Zeit dazu übergegangen, die Spiralkabeldose mit Fett auszufüllen, oder etwa Vlies- oder Teßonscheiben axial an die Kabelspirale anzulegen, wodurch in beiden Fällen eine Dämpfung der Kabelbewegungen erreicht wird.

Eine weitere, bekannte Lösung besteht darin, eine elastische Andrückeinrichtung im Kabelaufnahmeraum vorzusehen, die als einseitig von der Kabeldurchführung angeordnete Federeinrichtung ausgebildet ist und in der bekannten Ausführungsform die Form einer Federzunge aufweist, die einseitig von einer in die Kabeldurchführung der Innenzylinderwand eingesetzten Zugentlastungseinrichtung abgeht.

Bei der bekannten elastischen Andrückeinrichtung ragt das freie Federzungenende ausgehend von der Innenzylinderwand radial in den Kabelaufnahmeraum hinein und bewirkt daher ein elastisches Abhalten der radial außen am Federzungenende anliegenden Kabelspirale von der Innenzylinderwand. Damit wird verhindert, daß die Kabelspirale im Bereich der Federzunge gegen die Innenzylinderwand schlagen kann.

Da die Anordnung des Flachkabels in Form einer Kabelspirale zwangsläufig eine in sich extrem flexible Ausbildung des Flachkabels erforderlich macht, hat sich die auf den Ort der Kabeldurchführung bezogene, lediglich einseitige Ausbildung der Federeinrichtung in manchen Fällen als unzureichend erwiesen, um Klappergeräusche zu verhindern.

Der vorliegenden Erfindung liegt die Aufgabe zugrunde, die im Zusammenhang mit einer Spiralkabeldose bekannte, elastische Andrückeinrichtung so zu verbessern, daß das Auftreten von durch radiales Spiel verursachten Klappergeräuschen in jedem Fall zuverlässig verhindert wird.

Zur Lösung dieser Aufgabe weist die erfindungsgemäße Vorrichtung die Merkmale des Anspruchs 1 auf.

Erfindungsgemäß ist die elastische Andrückeinrichtung beidseitig der Kabeldurchführung auf die Kabelspirale wirkend ausgebildet. Hierdurch wird ein sicheres Abhalten der Kabelspirale von der Innenzylinderwand in mindestens zwei Kabelspiralbereichen erreicht, wodurch eine wesentlich bessere Kontrolle der Bewegungen des zu der Kabelspirale aufgewickelten Flachkabels möglich ist.

Obwohl diese Lösung auf den ersten Blick überraschend einfach erscheint, wurde sie bis zum Anmeldetag nicht aufgefunden, da offensichtlich die geschilderte, vorteilhafte Wirkung der zweiseitig wirkenden Ausbildung der Andrückeinrichtung von den Fachleuten nicht erkannt wurde.

In einer bevorzugten Ausführungsform ist die elastische Andrückeinrichtung ringförmig um die Innenzylinderwand herum ausgebildet und mit mindestens zwei Federeinrichtungen versehen, die je derart angeordnet oder ausgebildet sein können, daß sich eine äquidistante Abstützung der Kabelspirale ergibt. Die insgesamt ringförmige Ausbildung ermöglicht dabei eine besonders einfache Integration der Andrückeinrichtung in die Spiralkabeldose.

In einer Ausführungsform kann die vorgenannte
Andrückeinrichtung als ein Ringeinsatz ausgebildet sein, der um die Innenzylinderwand herum angeordnet werden kann und dessen Federeinrichtungen aus einstückig mit dem Ringeinsatz verbundenen Federzungen bestehen. Mit einer derartigen Andrückeinrichtung lassen sich Spiralkabeldosen einfach nachrüsten, ohne daß hierzu der Einbau der bekannten, vorstehend beschriebenen Zugentlastungseinrichtung notwendig wäre, die zudem, wie ebenfalls vorstehend ausgeführt, sich in ihrer Wirkung bezüglich der Unterdrückung von Klappergeräuschen als unzureichend erweist.

Zur Ausbildung einer Kabeldurchführung, die dann deckungsgleich mit der in der Innenzylinderwand vorgesehenen Kabeldurchführung angeordnet werden kann, läßt sich zumindest eine Federzunge des Ringeinsatzes dadurch ausbilden, daß eine zungenförmige Materialausbiegung aus der Ebene eines Ringkörpers heraus vorgesehen wird.

Eine andere vorteilhafte Möglichkeit, die erfindungsgemäße Andrückeinrichtung auszubilden, besteht darin, für die Federeinrichtung zungenförmige Materialausbiegungen der Innenzylinderwand vorzusehen. Bei dieser Lösung ist die Andrückeinrichtung integral mit der Innenzylinderwand ausgebildet, so daß kein weiteres Bauteil zur Erzielung der vorstehend geschilderten, vorteilhaften Wirkung notwendig ist.

Weiterhin besteht auch die Möglichkeit, eine weitere Andrückeinrichtung vorzusehen, die zumindest einseitig der in der Außenzylinderwand ausgebildeten Kabeldurchführung wirkend ausgebildet ist. Hierdurch läßt sich die Wirkung der an der Innenzylinderwand angeordneten Andrückeinrichtung noch verstärken, wobei auch vorstellbar ist, die an der Außenzylinderwand vorgesehene Andrückeinrichtung anstatt der innen angeordneten Einrichtung vorzusehen.

Die weitere elastische Andrückeinrichtung kann ringförmig entlang der Außenzylinderwand ausgebildet und mit mindestens einer Federeinrichtung versehen sein. Dabei kann auch die weitere elastische Andrückeinrichtung als Ringeinsatz vorgesehen sein, dessen Federeinrichtung einstückig mit dem Ringeinsatz verbunden ist. Wie bei der vorstehend genannten, innen angeordneten Andrückeinrichtung kann auch bei der weiteren Andrückeinrichtung zur Ausbildung einer Kabeldurchführung im Ringeinsatz eine Federzunge mittels einer zungenförmigen Materialausbiegung aus einem Ringkörper heraus ausgebildet sein.

Auch bei der äußeren Andrückeinrichtung besteht die Möglichkeit, die Federeinrichtung aus einer zungenförmigen Materialausbiegung der Außenzylinderwand zu bilden, so daß eine insgesamt mit der Außenzylinderwand integrale Ausgestaltung der äußeren Andrückeinrichtung möglich ist.

Sowohl bei der inneren Andrückeinrichtung als auch bei der äußeren Andrückeinrichtung besteht die Möglichkeit, die Federzungen der Ringanordnung so anzuordnen, daß sich eine insgesamt turbinenradförmige Anordnung ergibt, bei der die einzelnen Federzungen gleichsinnig ausgerichtet sind. Bei Bedarf besteht jedoch auch die Möglichkeit, die Federzungen einer Ringanordnung sich zumindest teilweise wechselsinnig erstreckend vorzusehen.

Bei einer Spiralkabeldose, die neben den im Oberbegriff des Anspruchs 1 genannten Merkmalen ein Kabelende aufweist, das abgewinkelt ausgebildet und mit einer Zugentlastungseinrichtung versehen ist, ist es besonders vorteilhaft, die erfindungsgemäß beidseitig wirkende elastische Andrückeinrichtung so auszubilden, daß sie an beiden Seiten der Zugentlastungseinrichtung vorgesehen ist. Hierdurch wird in dem Fall, in dem ohnehin eine Zugentlastungseinrichtung vorgesehen ist, kein weiteres Bauteil zur Realisierung der erfindungsgemäß zweiseitig wirkenden Andrückeinrichtung notwendig.

In einer bevorzugten Ausführungsform weist die Zugentlastungseinrichtung hierbei ein mit einem Deckelteil versehenes Kabeldurchführungsteil zum Einsatz in die Kabeldurchführung und zur Aufnahme des abgewinkelten Kabelendes auf, wobei eine erste zungenförmige Federeinrichtung mit dem Kabeldurchführungsteil und eine zweite zungenförmige Federeinrichtung mit dem Deckelteil verbunden ist, derart, daß die beidseitig wirkende, elastische Andrückeinrichtung bei auf dem Kabeldurchführungsteil angeordnetem Deckelteil gebildet ist.

Durch diese auf zwei Teile der Zugentlastungseinrichtung aufgeteilte Ausbildung der Andrückeinrichtung wird quasi automatisch bei der Anordnung des Kabelendes in der Zugentlastungseinrichtung die zweiseitig wirkende Andrückeinrichtung realisiert, ohne daß hierzu ein weiterer Montagehandgriff notwendig wäre.

In einer besonders zu bevorzugenden Ausführungsform der mit der Zugentlastungseinrichtung kombinierten Andrückeinrichtung ist in dem dem Kabeldurchführungsteil gegenüberliegenden Endbereich der Zugentlastungseinrichtung ein Formschlußteil vorgesehen, das zum formschlüssigen Einsatz in ein Steckverbindergehäuse dient. Durch das Formschlußteil wird nicht nur eine Zugentlastung des Flachkabelendes im Übergangsbereich zur Spiralkabeldose sondern auch eine Zugentlastung im Übergangsbereich des
Flachkabels zu einer etwa am Lenkstock angeordneten Steckverbindungseinrichtung ermöglicht. Hierdurch wird sichergestellt, daß nicht nur eine Zugentlastung für das Flachkabelende gegeben ist, sondern darüber hinaus durch die Ruhigstellung des Flachkabelendes keine Bewegungen über das Flachkabelende auf die Andrückeinrichtung übertragen werden können. Hierdurch wird in besonders wirkungsvoller Weise verhindert, daß etwa durch die Andrückeinrichtung selbst Klappergeräusche provoziert werden könnten.

Unabhängig davon, ob die Federzungen der Andrückeinrichtung Bestandteil einer Zylinderwand, eines Ringeinsatzes oder der Zugentlastungseinrichtung sind, können die Federzungen oder zumindest eine Federzunge der jeweiligen Andrückeinrichtungsausführungsform mit einer Flachkabelzerstörungseinrichtung versehen sein, derart, daß bei Überschreiten einer vorgegebenen Druckbeanspruchung des Federzungenendes eine mechanische Zerstörung des am Federzungenende anliegenden Flachkabelbereichs erfolgt. Dies löst bei der an die Steuereinrichtung angeschlossenen Kabelspirale eine Alarmanzeige für das Nicht-Funktionieren des Airbags aus.

Diese besondere Ausführungsform der Federzungen schafft eine bisher nicht bekannte Sicherheitseinrichtung, die ein Versagen der Airbag-Funktion nach einem fehlerhaften Einbau der Kabelspirale in die Spiralkabeldose verhindert. Beispielsweise dann, wenn die Kabelspirale derart eingebaut ist, daß sie nicht beiden maximalen Lenkausschlägen des Lenkrades folgen kann und erst kurz vor einem Unfall, bei welchem das Aufblasen des Airbags erfolgen sollte, infolge eines weiteren Lenkradausschlages als er der Kabelspirale möglich ist, die Kabelspirale beschädigt wird.

In einer bevorzugten Ausführungsform ist die Flachkabelzerstörungseinrichtung mit einem Eindringkörper versehen, der bei Auslenkung des Federzungenendes gegenüber einer starr mit dem anderen Körper verbundenen Federzungenbasis in einen am Federzungenende anliegenden Flachkabelbereich eindringt. Die auf diese Art und Weise erfolgte mechanische Zerstörung des Flachkabels hat zur Folge, daß, je nach Ausmaß der Zerstörung, sich die elektrischen Leitungsparameter, wie etwa der Ohmsche Widerstand, ändern. Dies kann durch eine entsprechende elektrische Überwachungeinrichtung überprüft und für den Fahrzeuglenker sichtbar zur Anzeige gebracht werden.

Nachfolgend werden bevorzugte Ausführungsformen der erfindungsgemäßen Andrückeinrichtung anhand der Zeichnungen näher erläutert. Es zeigen:
**Fig. 1** eine Explosionsdarstellung einer aus einem Außenteil und einem Innenteil zusammensetzbaren Spiralkabeldose;
**Fig. 2** eine Kabelspirale zum Einsatz in der in

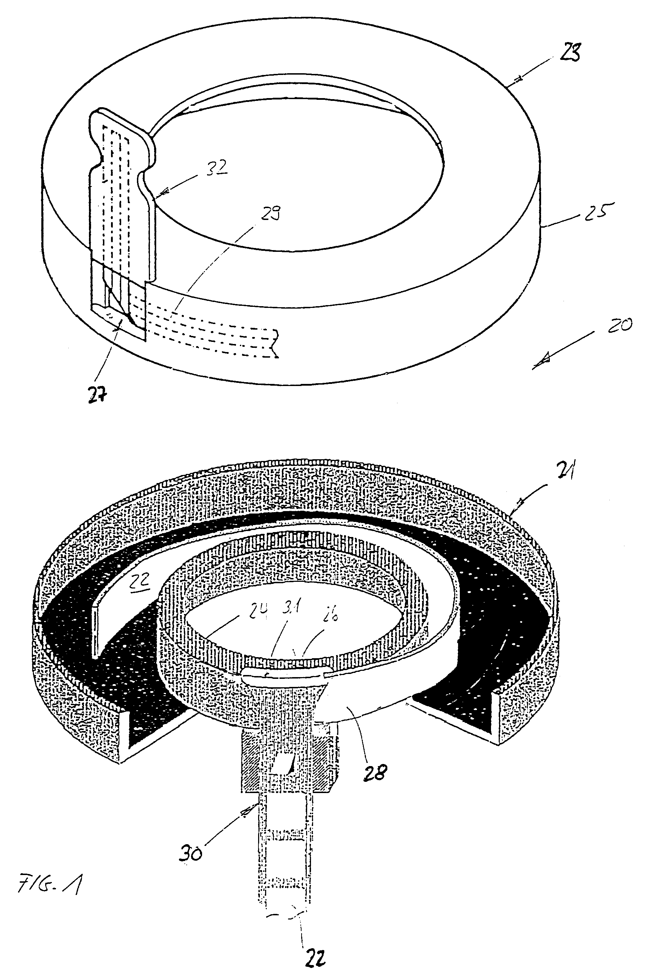

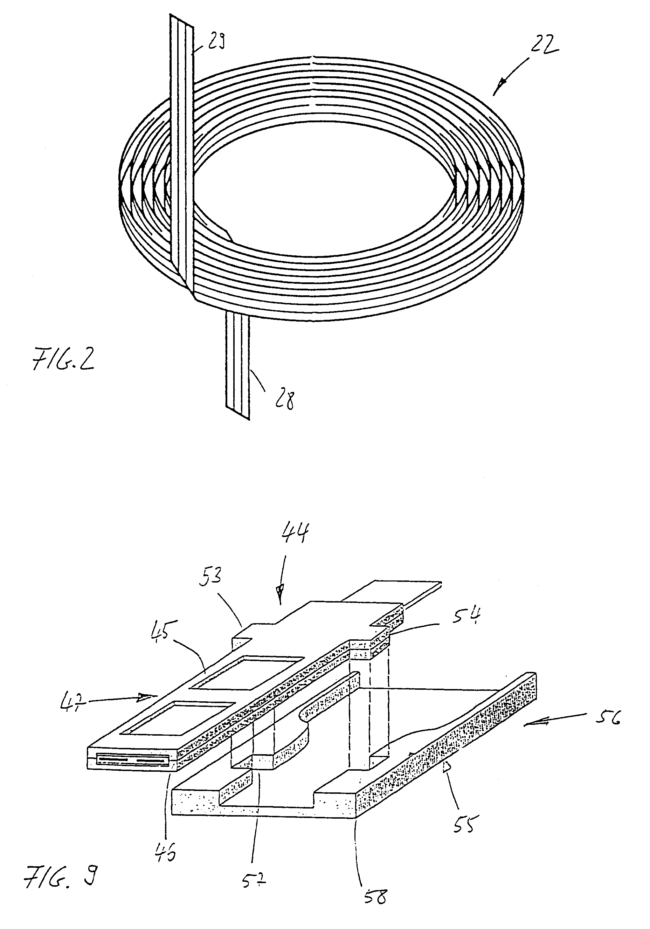

**Fig. 1** dargestellten Spiralkabeldose;
**Fig. 3** eine mit einem Ausführungsbeispiel der erfindungsgemäßen Kabelandrückeinrichtung versehene Zugentlastungseinrichtung im Zustand der Montage an einem abgewinkeltem Kabelende der Kabelspirale;

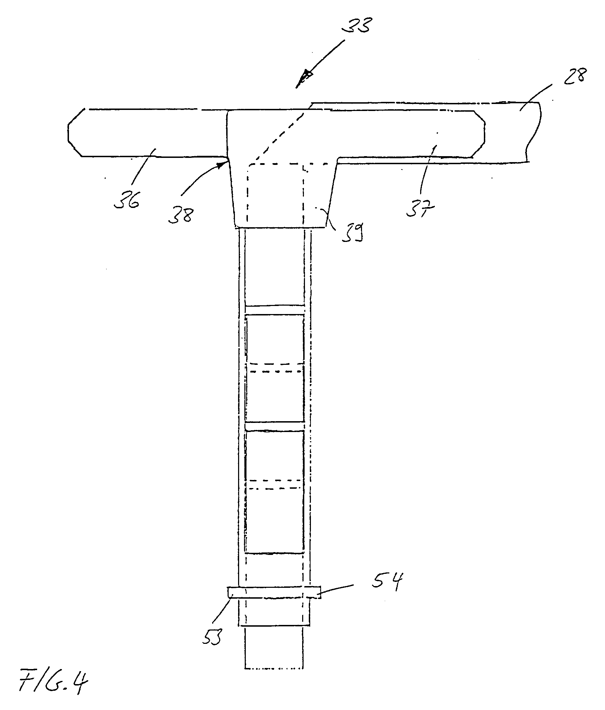

**Fig. 4.** die in **Fig. 3** dargestellte Zugentlastungseinrichtung nach Abschluß der Montage am Kabelende der Kabelspirale;
**Fig. 5** die mit einer Ausführungsform der Andrückeinrichtung gemäß den **Fig. 3 und 4** versehene Zugentlastungseinrichtung in ihrer Einbaulage in der Spiralkabeldose und in schematischer Darstellung;

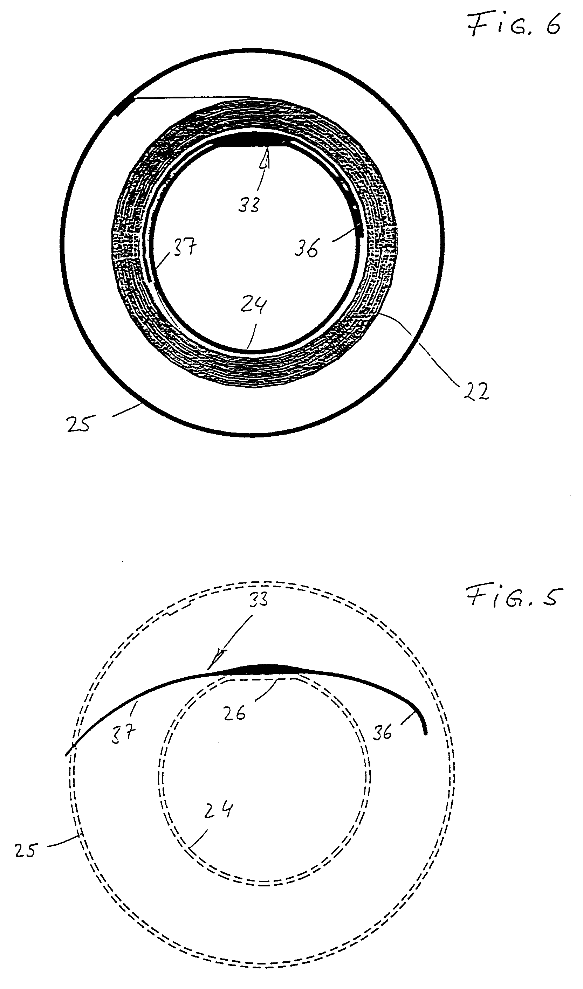

**Fig. 6** die mit der Andrückeinrichtung versehene Zugentlastungseinrichtug in einer in Innenlage an einer Innenzylinderwand der Spiralkabeldose anliegenden Kabelspirale;

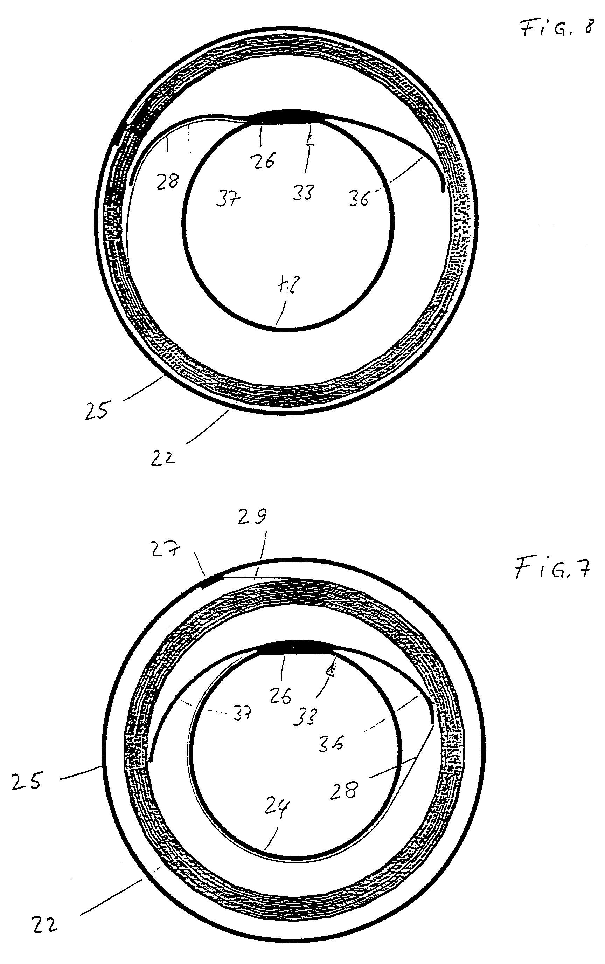

**Fig. 7** die in **Fig. 6** dargestellte Kabelspirale in einer Mittellage;
**Fig. 8** die in den **Fig. 6 und 7** dargestellte Kabelspirale in einer an der Außenzylinderwand anliegenden Außenlage;

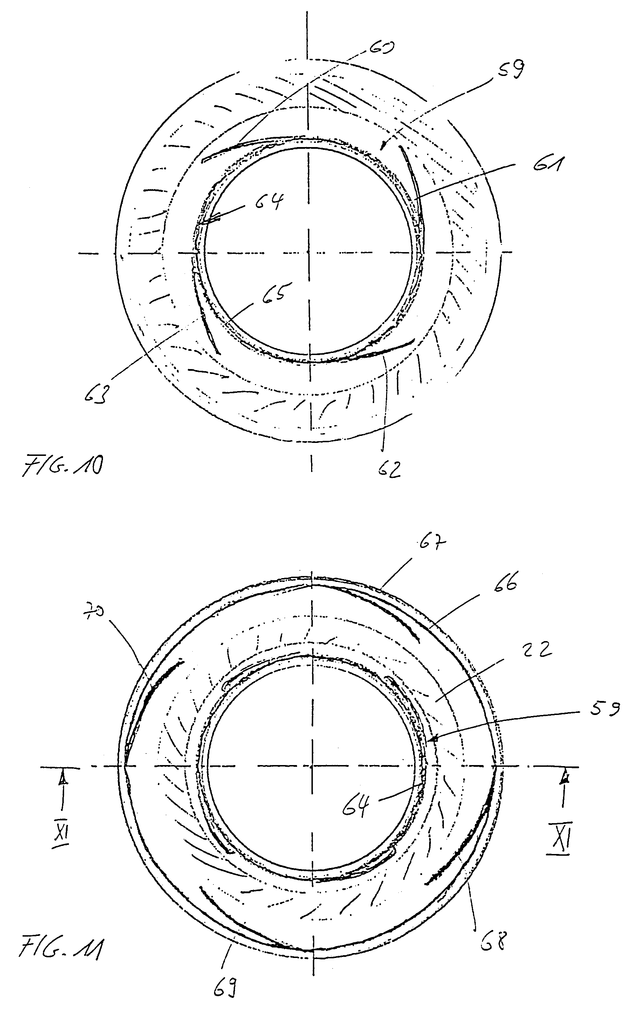

**Fig. 9** ein am freien Ende einer Zugentlastungseinrichtung vorgesehenes Formschlußteil zur Aufnahme in einem Steckverbindungsgehäuse;
**Fig. 10** eine weitere Ausführungsform der erfindungsgemäßen Andrückeinrichtung, bei der diese als ein um die Innenzylinderwand herum angeordneter Ringeinsatz ausgebildet ist;
**Fig. 11** eine Ausführungsform der Andrückeinrichtung, bei der neben dem in **Fig. 8** dargestellten, um die Innenzylinderwand herum angeordneten Ringeinsatz ein weiterer, an einer Außenzylinderwand anliegend angeordneter Ringeinsatz vorgesehen ist;

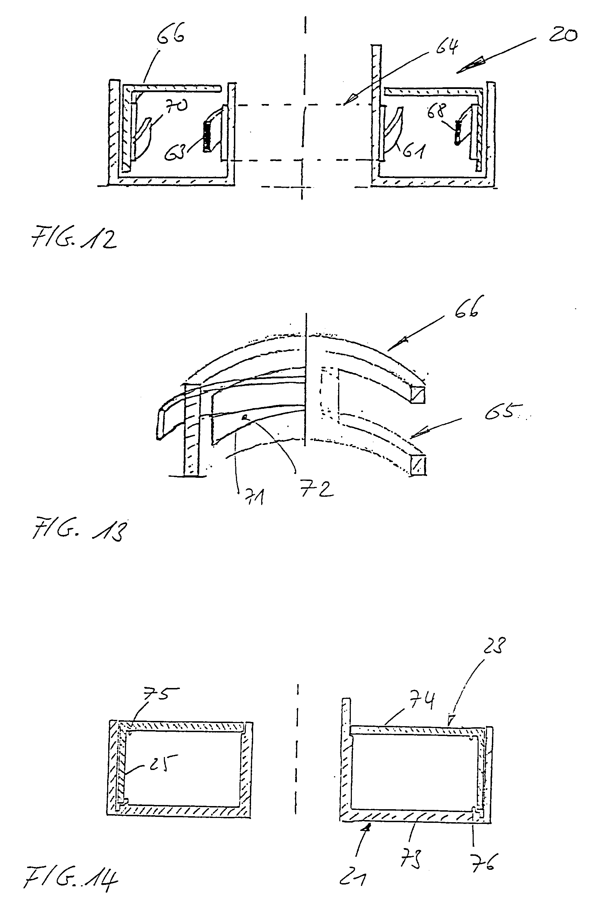

**Fig. 12** eine Schnittdarstellung der in **Fig. 11** dargestellten Ringeinsatzanordnung gemäß Schnittlinienverlauf XI-XI;
**Fig. 13** eine Einzeldarstellung des in **Fig. 10** geschnitten dargestellten inneren Ringeinsatzes;

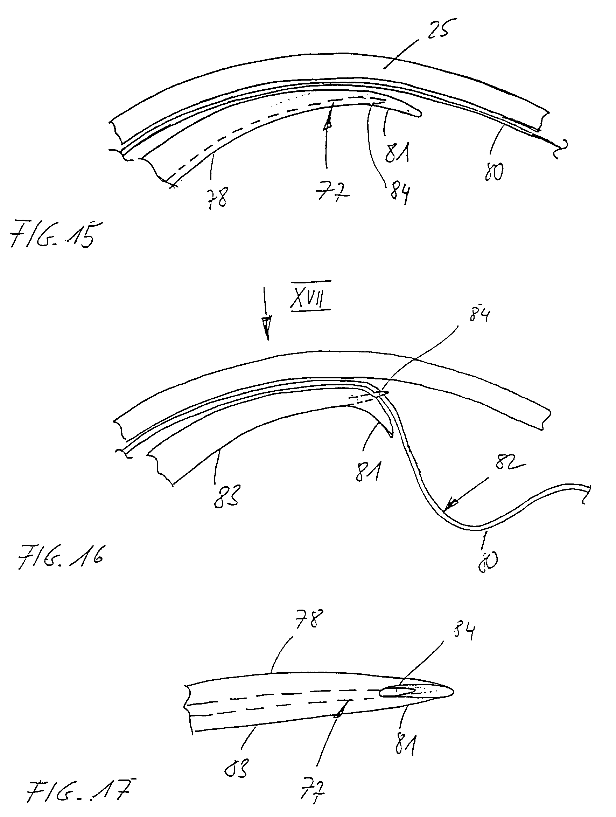

**Fig. 14** die in **Fig. 12** dargestellte Spiralkabeldose mit Kabelanschlageinrichtungen;
**Fig. 15** eine in einer Federzunge einer Andrückeinrichtung vorgesehene Flachkabelzerstörungseinrichtung in unbetätigtem Zustand;
**Fig. 16** die in **Fig. 15** dargestellte Flachkabelzerstörungseinrichtung in betätigtem Zustand;

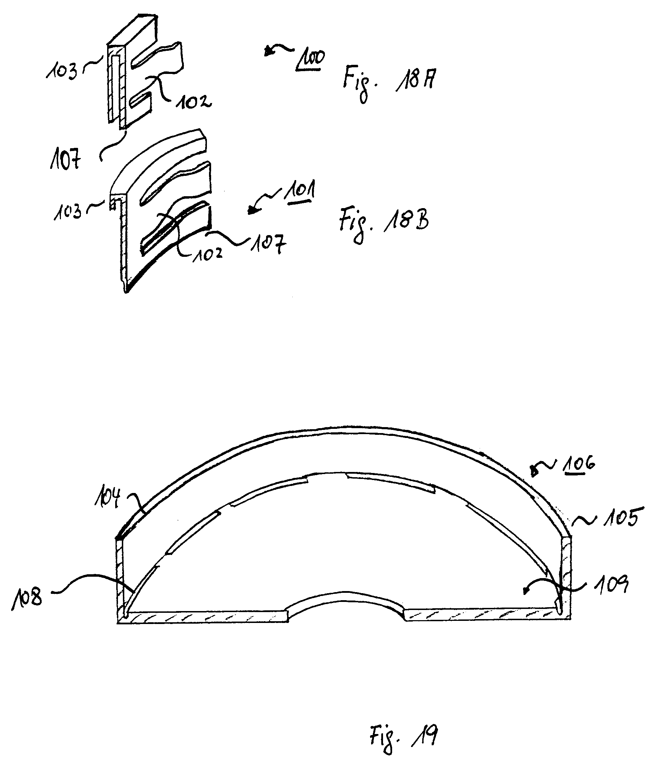

**Fig. 17** die in der Federzunge angeordnete Flachkabelzerstörungseinrichtung in einer Ansicht gemäß dem Pfeil XVII in **Fig. 16;**
**Fign. 18A** und **18B** je eine perspektivische Ansicht von Federlementen, die auch für einen nachträglichen Einbau in eine Spiralkabeldose geeignet sind;
**Fig. 19** eine perspektivische geschnittene Ansicht eines Innenteils mit Spritzgußwerkzeug-Trennlöchern;

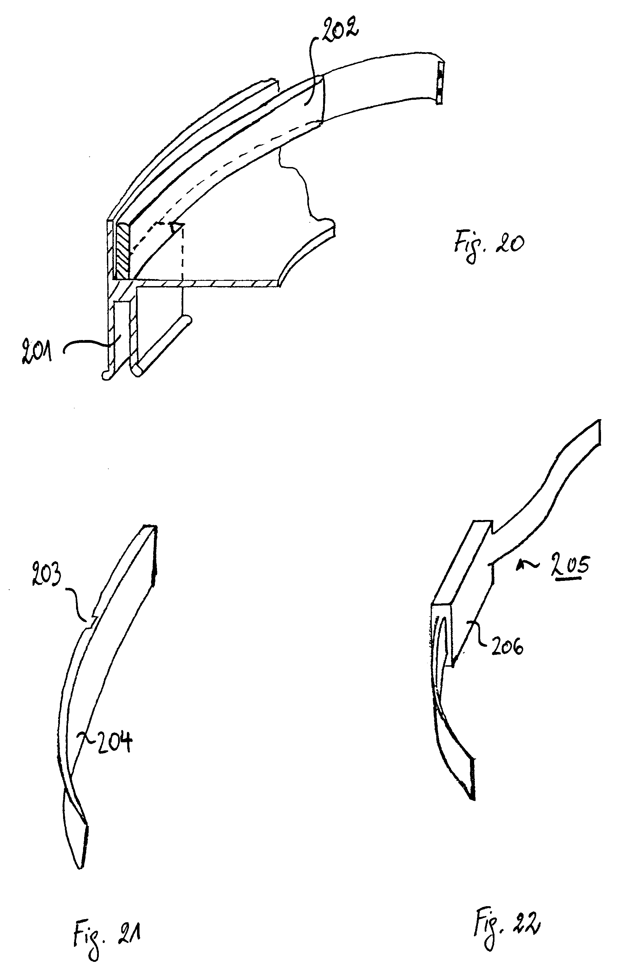

**Fig. 20** eine perspektivische Ansicht eines an der Zugentlastung eines Kabelabganges anzubringendes Federelement, das auch für einen nachträglichen Einbau in eine Spiralkabeldose geeignet ist;

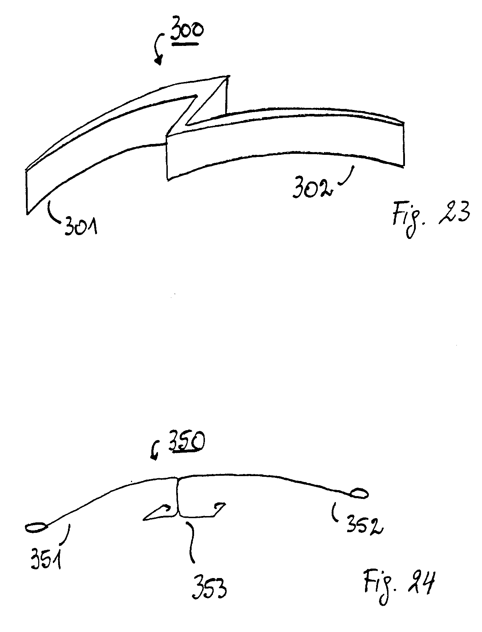

**Fign. 21** und **22** perspektivische Ansichten von Federelementen, die an der Zugentlastung eines Kabelabganges anzubringen sind und die auch für einen nachträglichen Einbau in eine Spiralkabeldose geeignet sind;
**Fig. 23** eine perspektivische Ansicht eines Wendefederelementes, das auch für einen nachträglichen Einbau in eine Spiralkabeldose geeignet ist.

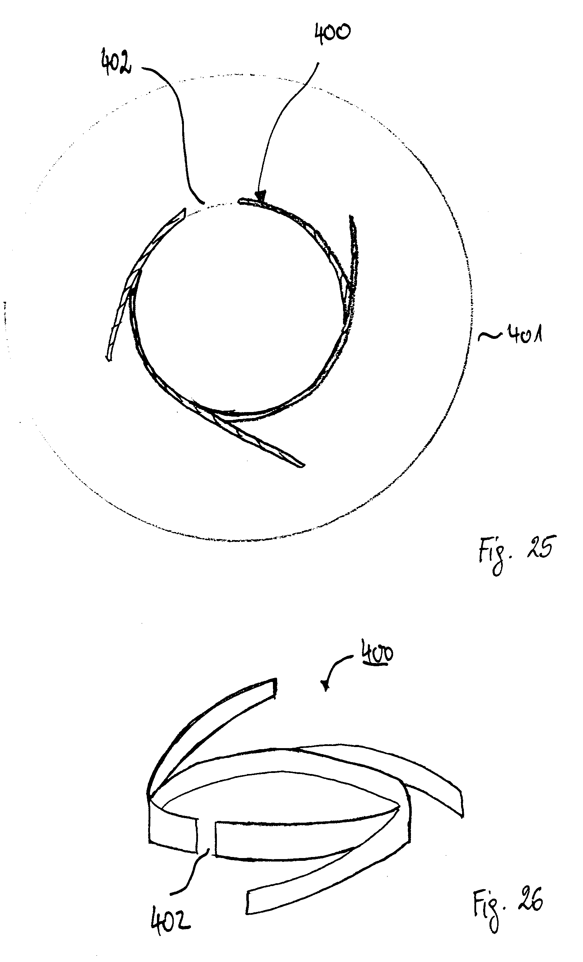

**Fig. 24** eine perspektivische Ansicht eines Drahtfederelementes, das auch für einen nachträglichen Einbau in eine Spiralkabeldose geeignet ist;
**Fig. 25** eine Draufsicht auf ein Innenteil mit einem um dessen Innenzylinderwand gelegten Federring, der auch für einen nachträglichen Einbau in eine Spiralkabeldose geeignet ist;
**Fig. 26** zeigt eine perspektivische Aufsicht auf den in Fig. 25 dargestellten Federring;

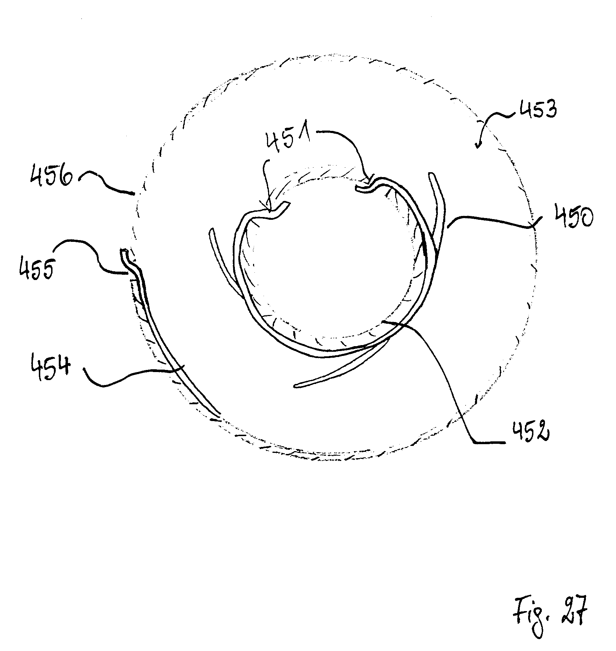

**Fig. 27** eine Draufsicht auf ein Innenteil mit einem um dessen Innenzylinderwand gelegten Federring sowie einem am Außenzylinder befestigten Federelement, die auch für einen nachträglichen Einbau in eine Spiralkabeldose geeignet sind, wobei beide Federn durch eine Hinterklemmung befestigt sind;
**Fig. 28** zeigt eine Draufsicht auf ein Innenteil mit einem am Kabelabgang festgeklemmten Federelement, das auch für einen nachträglichen Einbau in eine Spiralkabeldose geeignet ist;

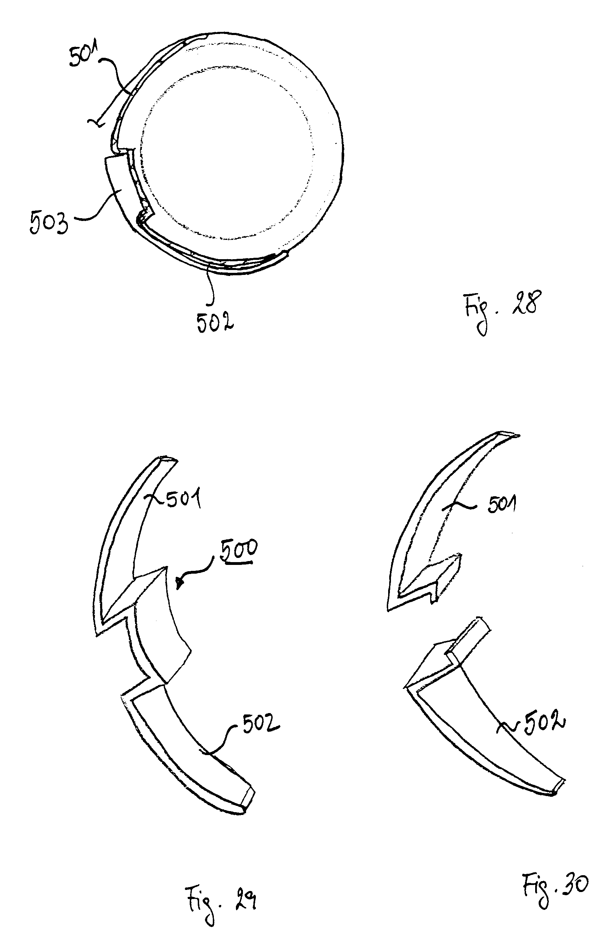

**Fign. 29** und **30** zeigen perspektivische Ansichten von ein- bzw. zweiteiligen Federlementen, die am Außenteil-Kabelabgang festklemmbar sind und die auch für einen nachträglichen Einbau in eine Spiralkabeldose geeignet sind;

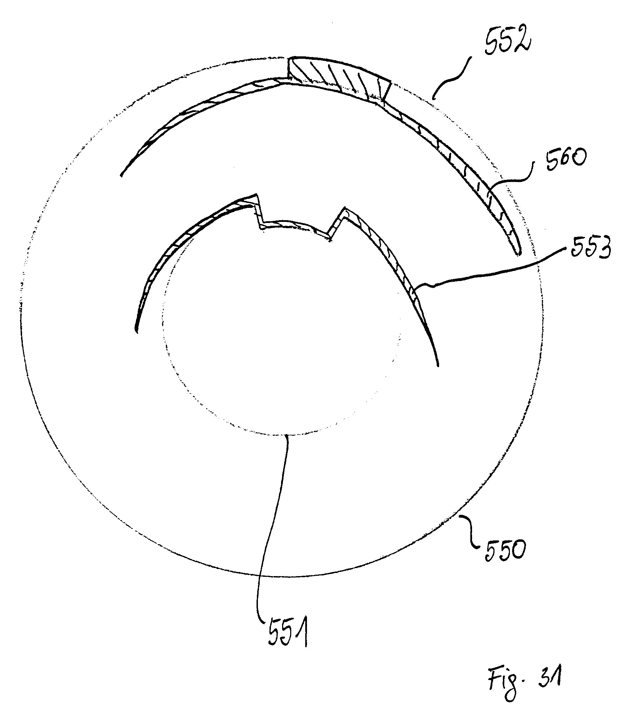

**Fig. 31** zeigt eine Schnittansicht eines Außenteils mit zwei geklemmten Federelementen;
**Fig. 32** zeigt eine Schnittansicht eines Innenteils mit einem am Kabelabgang des Innenzylinders festgeklemmten Federelement, das auch für einen nachträglichen Einbau in eine Spiralkabeldose geeignet ist;

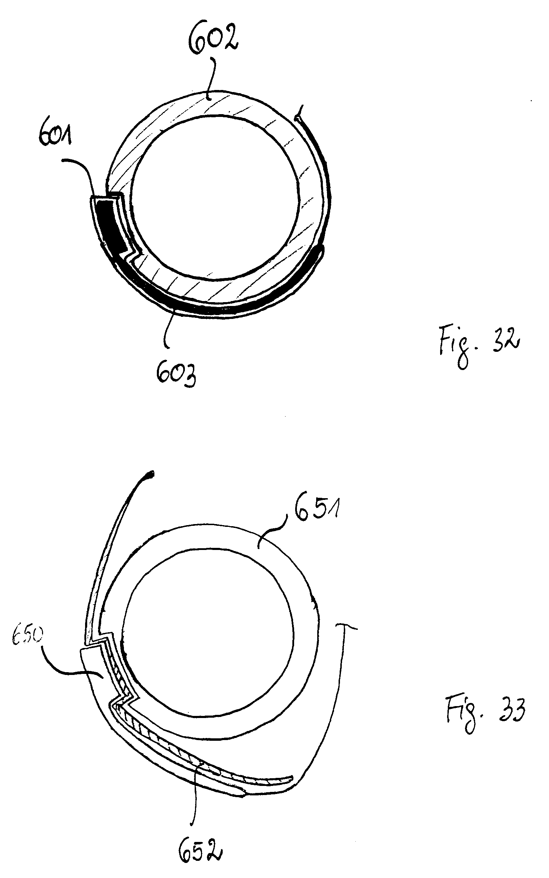

**Fig. 33** zeigt eine Schnittansicht eines Innenteils mit einem am Kabelabgang des Innenzylinders festgeklemmten Federelement, das auch für einen nachträglichen Einbau in eine Spiralkabeldose geeignet ist;

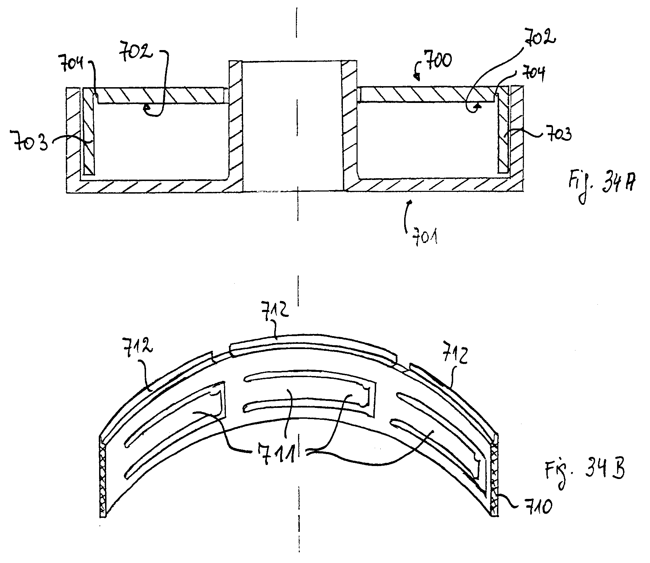

**Fig. 34A** und **34B** zeigen einen Querschnitt durch eine Spiralkabeldose bzw. ein als Stangenextrudierungs-Meterware hergestelltes Federelementeband, das auch für einen nachträglichen Einbau in eine Spiralkabeldose geeignet ist;
**Fig. 35** zeigt ein als Kappe ausgeführtes Federelement, das auf einen Kabelabgangsbereich aufsteckbar ist und das auch für einen nachträglichen Einbau in eine Spiralkabeldose geeignet ist;
**Fig. 36A** bis Fig. **36C** zeigen Ansichten von verschiedenen als Meterware hergestellten Federelementebändern, die auch für einen nachträglichen Einbau in eine Spiralkabeldose geeignet ist;

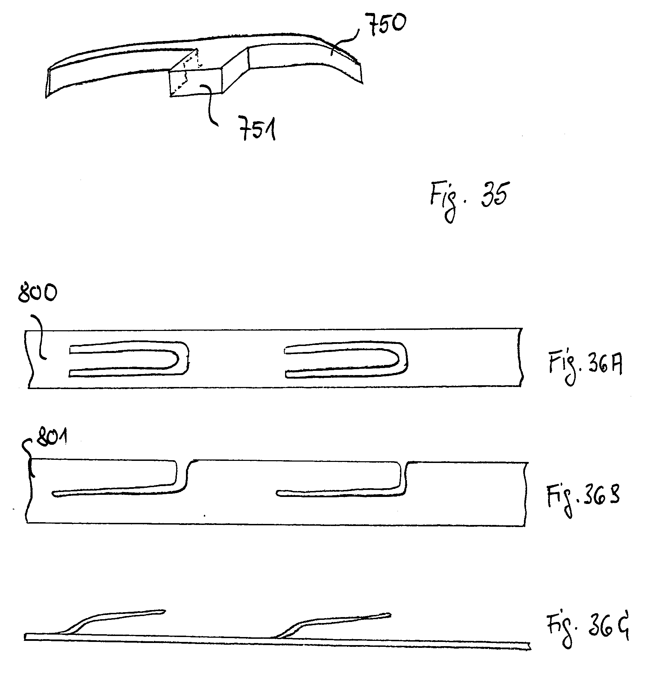

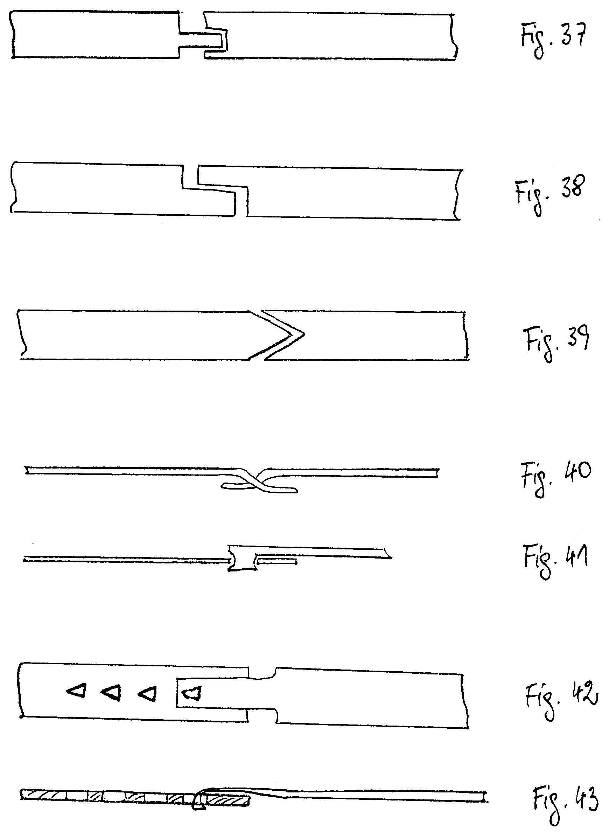

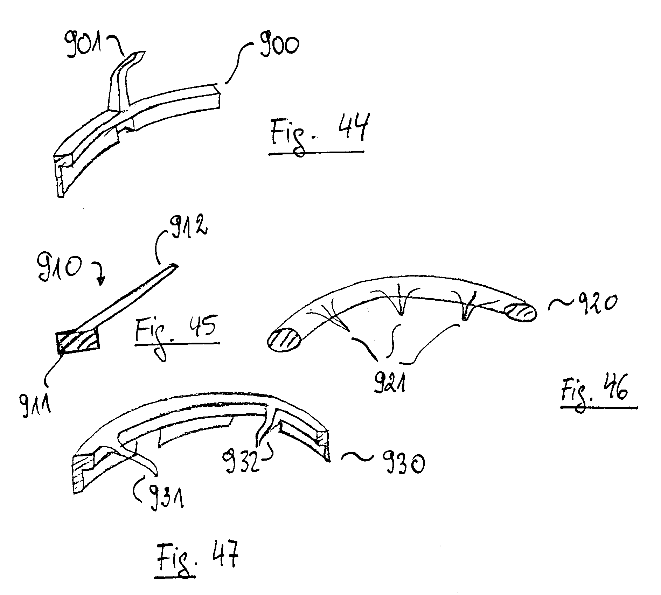

**Fig. 37** bis **43** zeigen Ansichten von Stoß- und Verbindungsstellen für als Meterware hergestellte Federlementebänder;
**Fig. 44** bis **47** zeigen Ansichten von Federelementen, die auch für einen nachträglichen Einbau in eine Spiralkabeldose geeignet sind.

**Fig. 1** zeigt in einer Explosionsdarstellung eine Spiralkabeldose 20 mit einem Außenteil 21, das zur Aufnahme einer Kabelspirale 22 dient, von der in **Fig. 1** nur eine Anfangswindung dargestellt ist. Die im Außenteil 21 angeordnete Kabelspirale 22 wird durch ein in das Außenteil 21 eingesetztes Innenteil 23 abgedeckt. Dabei wird die Kabelspirale 22 radial innen durch eine Innenzylinderwand 24 des Außenteils 21 und radial außen durch eine Außenzylinderwand 25 des Innenteils 23 begrenzt. Sowohl in der Innenzylinderwand 24 als auch der Außenzylinderwand 25 ist je eine Kabeldurchführung 26, 27 zur Durchführung eines abgewinkelten Kabelendes 28, 29 der Kabelspirale 22 vorgesehen.

Es ist bekannt, das Innere eines Kabelendes 28 in einer Zugentlastungseinrichtung 30 aufzunehmen, die mit ihrem Kabeldurchführungsteil 31 in die Kabeldurchführung 26 der Innenzylinderwand 24 eingesetzt ist. Das Kabelende 29 ist bei der hier dargestellten Spiralkabeldose im Bereich der Kabeldurchführung 27 in der Außenzylinderwand 25 durch eine Umlenkeinrichtung 32 gesichert.

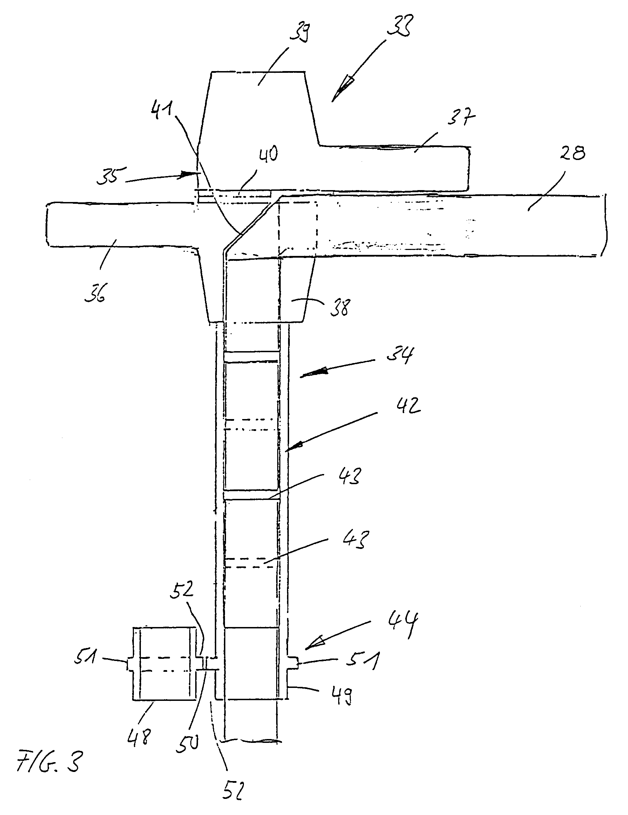

**Fig. 2** zeigt in Ergänzung zu **Fig. 1** die Kabelspirale 22 in einer vollständigen Darstellung, jedoch mit einem von der Darstellung in **Fig. 1** abweichenden Wickelsinn.

**Fig. 3** zeigt in einer ersten Ausführungsform eine Andrückeinrichtung 33 an einer Zugentlastungseinrichtung 34 mit beidseitig am Kabeldurchführungsteil 35 der Zugentlastungseinrichtung 34 vorgesehenen Federzungen 36, 37. Die in der Darstellung gemäß **Fig. 3** nach links abgehende Federzunge 36 ist einstückig mit einem Kabeldurchführungsbasisteil 38 und die nach rechts abgehende Federzunge 37 mit einem Deckelteil 39 des Kabeldurchführungsteils 35 verbunden. Das Deckelteil 39 ist über ein z.B. als Filmscharnier ausgebildetes Scharniergelenk 40 gegen das Kabeldurchführungsbasisteil 38 schwenkbar und über eine nicht näher dargestellte Rasteinrichtung mit diesem verbindbar. In Abwandlung der in Fig. 3 dargestellten Ausführungsform kann die Federzunge 37 als Verlängerung der Federzunge 36 ausgebildet sein oder umgekehrt, wobei entweder der Deckelteil 39 oder der Deckelteil 38 keinen Federzungenansatz aufweist. Zur Führung des abgewinkelten Kabelendes 28 durch das Kabeldurchführungsbasisteil 38 ist dieses mit einem diagonalen Schlitz 41 versehen. An das Kabeldurchführungsbasisteil 38 schließt sich ein leiterförmig ausgebildeter Zugentlastungsrahmen 42 an, über dessen Quersprossen 43 das Kabelende 28 zur Erzielung einer Kabelzugentlastung wechselweise unter- und überdeckend geführt ist. Das freie Ende des Zugentlastungsrahmens 42 ist als ein Formschlußteil 44 ausgebildet, auf dessen Funktion und besondere Ausbildung nachfolgend noch näher eingegangen werden wird.

**Fig. 4** zeigt die Andrückeinrichtung 33 in funktionsfähigem Zustand, bei dem das Deckelteil 39 unter zwischenliegender Aufnahme des Kabelendes 28 mit dem Kabeldurchführungsbasisteil 38 verriegelt ist.

**Fig. 5** zeigt die Andrückeinrichtung 33 in ihrem in **Fig. 4** dargestellten, funktionsfähigen Zustand, wobei zur Erläuterung der Positionierung der Andrückeinrichtung 33 in der Kabeldurchführung 26 der Spiralkabeldose 20 die Innenzylinderwand 24 und die Außenzylinderwand 25 in ihrer Relativlage zur Andrückeinrichtung 33 durch den gestrichelten Linienverlauf kenntlich gemacht sind. In **Fig. 5** befinden sich die Federzungen 36, 37 der Andrückeinrichtung 33 in verformungsfreiem Zustand. Obwohl die Federzungen 36, 37 in **Fig. 5** eine unterschiedliche Formgebung aufweisen, können die Federzungen natürlich auch identisch ausgebildet sein. Die unterschiedliche Ausbildung der Federzungen 36, 37 ermöglicht ein besonders gutes Anschmiegen und eine optimale Ausnutzung der Formelastizität der Federzungen bei der im geradeaus Fahrbetrieb eines Fahrzeuges am häufigsten vorliegenden, in **Fig. 7** dargestellten Mittellage der Kabelspirale 22.

**Fig. 6** zeigt die zwischen der Innenzylinderwand 24 und der Außenzylinderwand 25 der Spiralkabeldose 20 angeordnete Kabelspirale 22 in einer Innenlage, bei der die Kabelspirale 22 unter Überwindung der Federkraft der Federzungen 36, 37 gegen die Innenzylinderwand 24 gelegt ist. Bei dem in **Fig. 6** dargestellten Wickelsinn der Kabelspirale 22 wird die Innenlage erreicht, wenn sich das mit dem in **Fig. 1** dargestellten Innenteil 23 verbundene, hier nicht dargestellte Lenkrad in einer linken Anschlagstellung befindet.

**Fig. 7** zeigt, wie bereits erwähnt, die Kabelspirale 22 in einer Mittellage. Dabei ist das in die Spiralkabeldose durch die Kabeldurchführung 26 in der Innenzylinderwand 24 hindurchgeführte Kabelende 28 über die linke Federzunge 36 der Andrückeinrichtung 33 geführt. Die im Vergleich zur Federzunge 37 stärker ausgeführte Endbereichskrümmung der Federzunge 36 sorgt dabei für eine möglichst schonende Umlenkung des Kabelendes 28 über die Federzunge 36. Die im Vergleich zur Federzunge 36 relativ flach ausgeführte Endbereichskrümmung der Federzunge 37 sorgt, wie insbesondere aus **Fig. 7** ersichtlich wird, für eine Ausnutzung der gesamten Federlänge der Federzunge 37, um die Kabelspirale 22 von der Innenzylinderwand 24 abzuhalten. Hierdurch wird eine besonders weiche Dämpfung der Kabelspiralbewegungen erzielt.

In der in **Fig. 7** dargestellten Mittellage der Kabelspirale 22 halten beide Federzungen 36, 37 die Kabelspirale 22 in einem sicheren Abstand von der Innenzylinderwand 24 und verhindern ein Hin- und Herschlagen der Kabelspirale 22 in der Kabelspiraldose 20, wobei durch die beidseitige Anordnung der Federzungen 36, 37 eine zur Drehachse der Spiralkabeldose 20 koaxiale Anordnung der Kabelspirale 22 erzielt wird, die ein besonders gleichmäßiges Auf- und Abwickeln der Kabelspirale 20 bei Lenkradbewegungen ermöglicht.

**Fig. 8** zeigt die in der Spiralkabeldose 20 angeordnete Kabelspirale 22 in einer Außenlage, die bei dem in **Fig. 8** dargestellten Wickelsinn der Kabelspirale 22 bei einem rechten Lenkradanschlag erreicht wird. Auch in dieser Extremlage der Kabelspirale 22 sorgen die beidseitig der Kabeldurchführung 26 in der Innenzylinderwand 24 angeordneten Federzungen 36, 37 für die vorstehend bereits erwähnte koaxiale Ausrichtung der Kabelspirale 22. Darüber hinaus sorgt die beidseitige Anordnung der Federzungen 36, 37 sowohl bei den in den **Fig. 6 bis 8** dargestellen Lagen der Kabelspirale 22 als auch in Zwischenlagen dafür, daß mit einem Minimum an konstruktivem Aufwand nicht nur ein Klappern infolge einer Starrkörperbewegung der Kabelspirale 22 sondern auch aufgrund der Formflexibilität der Kabelspirale 22 vermieden wird.

**Fig. 9** zeigt das im Zusammenhang mit der Erläuterung der **Fig. 3** bereits erwähnte Formschlußteil 44 in einer vergrößerten Darstellung und abweichend von den Darstellungen in **Fig. 3** und **Fig. 4** als Endbereichsgestaltung eines aus zwei Leiterrahmen 45, 46 gebildeten Zugentlastungsrahmens 47.

Wie aus **Fig. 3** hervorgeht, weist das Formschlußteil 44 hier zwei Formschlußteilhälften 48, 49 auf, die über ein Filmscharnier 50 gegeneinander verschwenkbar verbunden sind. Die Formschlußteilhälften 48, 49 sind jeweils mit Vorsprüngen 51, 52 versehen, wobei die Vorsprünge 52 benachbart dem Filmscharnier 50 angeordnet sind. Die Vorsprünge 51 und die Vorsprünge 52 sind jeweils deckungsgleich ausgebildet, so daß, wie in den **Fig. 4 und 9** dargestellt, bei gegeneinander verschwenkten Formschlußteilhälften 48, 49 die beiden Vorsprünge 51 und die beiden Vorsprünge 52 jeweils einen gemeinsamen Formschlußteilvorsprung 53 bzw. 54 bilden.

Wie in **Fig. 9** durch den gestrichelten Linienverlauf dargestellt, dient der Formschlußteil 44 zum formschlüssigen Einsatz in ein Steckergehäusebasisteil 55 eines Steckergehäuses 56, das nach dem Einsetzen des Formschlußteils 44 über ein hier nicht näher dargestelltes Deckelteil z.B. ebenfalls über ein Filmscharnier verschließbar ist. Die Formschlußteilvorsprünge 53, 54 des Formschlußteils 44 greifen dabei in komplementär zu diesen im Steckergehäusebasisteil 55 ausgebildete Ausnehmungen 57, 58 ein.

Durch den formschlüssigen Einsatz des Formschlußteils 44 in das Steckergehäusebasisteil 55 ist sichergestellt, daß auch von elektrischen Zuleitungen, die zu einer das Steckergehäuse 56 umfassenden, nicht näher dargestellte Steckerverbindung führen, keine Kabelbewegungen auf das Kabelende 28 der Kabelspirale 22 übertragen werden können, die ihrerseits zu einer Zugbelastung der Steckerverbindung und damit zu einem unbeabsichtigten Lösen der Steckerverbindung führen könnten.

**Fig. 10** zeigt in einem weiteren Ausführungsbeispiel eine Andrückeinrichtung 59, die aus einem mit Federzungen 60, 61, 62, 63, versehenen Ringeinsatz 64 gebildet ist. Der Ringeinsatz 64 weist einen Ringbasiskörper 65 auf, der um die Innenzylinderwand 24 der Spiralkabeldose 20 herum angeordnet ist. Bei der in **Fig. 10** schematisch angedeuteten Kabelspirale 22 sorgen die Federzungen 60 bis 63 für einen gleichmäßigen Abstand der Kabelspirale 22 zur Innenzylinderwand 24.

**Fig. 11** zeigt die Andrückeinrichtung 59, bei der zusätzlich zum inneren Ringeinsatz 64 radial zwischen der Außenzylinderwand 25 und der Kabelspirale 22 ein äußerer Ringeinsatz 66 vorgesehen ist, der mit radial nach innen wirkenden Federzungen 67, 68, 69, 70 versehen ist. Infolge der zusätzlichen Wirkung der äußeren Federzungen 67 bis 70 sind, wie ein Vergleich der **Fig. 10 und 11** zeigt, die Federzungen 60 bis 63 des inneren Ringeinsatzes 66 weniger stark ausgelenkt. Insgesamt läßt sich durch die quasi verdoppelte Anordnung der Andrückeinrichtung 59 mit einem radial innen auf die Kabelspirale wirkenden inneren Ringeinsatz 64 und einem radial außen auf die Kabelspirale 22 wirkenden äußeren Ringeinsatz 66 die Belastung der einzelnen Federzungen verringern und somit die Funktionssicherheit der Andrückeinrichtung 59 weiter erhöhen.

Es bestellt auch die Möglichkeit, die Spiralkabeldose 20 lediglich mit äußeren Federzungen 67 bis 70 auszurüsten. In diesem Fall werden sie derart dimensioniert, daß sie die Kabelspirale 22 an die Innenzylinderwand 24 drücken können.

**Fig. 12** zeigt in einer Schnittdarstellung deutlich die vom inneren Ringeinsatz in den Innenraum der Spiralkabeldose 20 hineinragenden Federzungen 61 und 63 und die ebenfalls in den Innenraum der Spiralkabeldose 20 hineinragenden Federzungen 68 und 70 des äußeren Ringeinsatzes 66.

Wie in **Fig. 13** dargestellt, sind die einzelnen Federzungen als Materialausbiegungen des Ringbasiskörpers 65 ausgebildet, die als integrale Bestandteile des Ringbasiskörpers durch einen entsprechend ausgebildeten Verlauf eines Einschnitts 71 vom übrigen Ringbasiskörper 65 abgeteilt und im Fall des in
**Fig. 13** dargestellten, inneren Ringeinsatzes 66 nach außen ausgelenkt sind. Natürlich ist es auch möglich, die Federzungen als Anspritzteile eines Ringbasiskörpers vorzusehen. Die in **Fig. 13** dargestellte Ausführung weist demgegenüber jedoch den Vorteil auf, daß gleichzeitig mit den Materialausbiegungen auch Durchbrüche 72 im Ringbasiskörper 65 geschaffen sind, die als Kabeldurchführung dienen können.

**Fig. 14** zeigt eine Ausführungsform einer Spiralkabeldose 20, bei der Ringscheibenwände 73, 74 des Außenteils 21 und des Innenteils 23 mit Anschlageinrichtungen 75, 76 versehen sind, die, hier als Noppen ausgebildet, ebenfalls dafür sorgen, daß die Kabelspirale von der Außenzylinderwand 25 abgehalten wird. Derartige Anschlageinrichtungen 75, 76 können auch in Kombination mit dem inneren Ringeinsatz 64 verwendet werden.

In den **Fig. 15 bis 17** ist eine Flachkabelzerstörungseinrichtung 77 dargestellt, deren Funktion insbesondere anhand der **Fig. 15 und 16** deutlich wird.

Die in **Fig. 15** in einer Federzunge 78 ausgebildete Flachkabelzerstörungseinrichtung 77 weist die Form eines im rückwärtigen Federzungenbereichs eingelegten Dorns auf, der bei einem regulär ausgebildeten Verlauf des Flachkabels 80 parallel zur Außenzylinderwand 25 vom Federzungenende 81 abgedeckt wird.

**Fig. 16** zeigt die Verhältnisse bei Ausbildung einer Schlaufe 82 im Flachkabel 80. Eine derartige Schlaufenbildung kann eintreten, wenn der Einbau der Kabelspirale 22 nicht bei Lenkradmittenstellung erfolgt ist, so daß in einer Lenkradanschlagstellung das zur Kabelspirale 22 aufgewickelte Flachkabel 80 gestaucht werden muß, um Platz in der Spiralkabeldose 20 zu finden.

Aufgrund der gegenüber einer Federzungenbasis 83 relativ biegeweichen Ausbildung des Federzungenendes 81 wird dieses bei der in **Fig. 16** dargestellten Ausbildung der Schlaufe 82 gegenüber der Federzungenbasis 83 ausgelenkt, so daß eine, wie in **Fig. 17** dargestellt, in einer Ausnehmung im Federzungenende 81 angeordnete Dornspitze 84 freikommt und, wie in **Fig. 16** dargestellt, in das Flachkabel 80 eindringt. Als Folge hiervon ändern sich die elektrischen Leitungseigenschaften des Flachkabels 80, die über eine geeignete Vorrichtung überprüft und bei Feststellung einer Änderung im Instrumentenbereich des Fahrzeugarmaturenbretts zur Anzeige gebracht werden können, um den Fahrzeugführer über die Funktionsstörung des Flachkabels 80 zu informieren.

Bei der in den **Fig. 15 bis 17** dargestellten Flachkabelzerstörungseinrichtung 77 ist diese als einfacher Dorn mit einer einzigen Dornspitze 84 ausgebildet. Darüber hinaus sind jedoch viele andere Ausführungsformen denkbar, so daß die Flachkabelzerstörungseinrichtung auch mit mehreren Dornspitzen ausgebildet sein kann, die hinsichtlich ihrer Anzahl und Anordnung der Lage von mehreren Leiterbahnen im Flachkabel entsprechen können. Eine weitere Möglichkeit besteht darin, die eine oder mehrere Dornspitzen mit einem Widerhaken zu versehen, um den Zerstörungseffekt zu vergrößern. Auch ist es möglich, die Auslenkbarkeit des Federzungenendes gegenüber der Federzungenbasis durch ein federgestütztes Scharnier sicherzustellen, um somit aufgrund einer besonders ausgewählten Feder den Druckschwellwert, bei dem eine Auslenkung des Federzungenendes erfolgt, genau einstellen zu können. Auch muß der Dorn nicht in jedem Fall als ein, wie insbesondere in **Fig. 15** dargestellt, in eine Federzunge integriertes Bauteil ausgeführt sein, sondern kann z.B. auch von außen mittels einer Crimpverbindung kraft- und formschlüssig mit der Federzungenbasis verbunden aufgesetzt sein.

Die in den **Fig. 18A bis 47** dargestellten Federelemente ermöglichen auf besonders einfache Art und Weise den Zusammenbau einer erfindungsgemäßen Spiralkabeldose auch auf dem Wege einer nachträglichen Ausrüstung einer herkömmlichen Spiralkabeldose mit geeignet geformten Andrückelementen. Dabei kommt es besonders darauf an, den im Kabelaufnahmeraum einer Spiralkabeldose vorhandenen Raum möglichst effizient zur Unterbringung von als Andrückeinrichtung wirkenden Federelementen zu nutzen.

**Fig. 18A und 18B** zeigen je eine perspektivische Ansicht von Federelementen 100 und 101, die jeweils eine Federzunge 102 aufweisen. Die Befestigung dieser Federelemente 100 und 101 erfolgt einerseits durch ein Schulterstück 103, das über die Außenkante 104 beispielsweise des in Fig. 19 gezeigten Außenzylinders 105 eines Innenteiles 106 gehängt wird, andererseits durch Einstecken der Federelemente-Unterkante 107 in Spritzgußwerkzeug-Trennlöcher oder Spritzgußwerkzeug-Trennvertiefungen 108 an der Innenkante zwischen der Ringscheibe 109 und der Außenzylinderwand 105 des Innenteils 106.

**Fig. 20** zeigt eine perspektivische Ansicht eines an der Zugentlastung 201 eines Kabelabganges anzubringendes Federelement 202. **Fig. 21** zeigt ein Federelement 204, das mit einer Ausnehmung 203 hinter einer Zugentlastung eines Kabelabgangs hinterklemmt werden kann. **Fig. 22** zeigt eine perspektivische Ansicht eines Federelementes 205, das mittels einer Aufstecksektion einer Zugentlastung überstülpt bzw. hinterklemmt werden kann.

**Fig. 23** zeigt eine perspektivische Ansicht eines Wendefederelementes mit zwei gegenläufigen Schenkeln 301 und 302, das durch einen Klemmsitz in einer Spiralkabeldose befestigt wird und einen beidseitigen Kabelabgang ermöglicht.

**Fig. 24** zeigt eine perspektivische Ansicht eines Wendefederelementes 350, das aus einem Metalldraht gefertigt ist und zwei Schenkel 351 und 352 aufweist. Es wird mit einer Fixierdrahtklemme 353 hinter einer Zugentlastung hinterklemmt und dadurch befestigt.

**Fig. 25 und 26** zeigen einen Federring 400, der mit einem Klemmsitz auf den Innenzylinder des Innenteils 401 aufgesetzt wird. Zur Anpassung an Durchmessertoleranzen bzw. um Platz für eine Zugentlastung zu haben weist der Federring einen Spalt 402 auf. **Fig. 27** zeigt einen Federring 450, der mittels zweier Hinterklemmstücke 451 am Innenzylinder 452 eines Innenteils 453 fixiert ist, sowie ein einzelnes Federelement 454, das auf ähnliche Weise in einer Öffnung 455 der Außenzylinderwand 456 des Innenteils 453 befestigt ist.

Die **Fig. 28, 29 und 30** zeigen ein Federelement 500 mit zwei Federschenkeln 501 und 502, das an einem Kabelabgang 503 durch Klemmsitz fixiert wird. Bei Platzmangel kann dieses Federelement 500 auch in der in **Fig. 30** gezeigten zweiteiligen Ausführung verwendet werden.

**Fig. 31** zeigt ein Innenteil 550 mit einem Innenzylinder 551 und einem Außenzylinder 552, an deren jeweiligen Kabelabgang jeweils Federelemente 553 bzw. 560 durch Klemmsitz angebracht sind. Der Innenzylinder 551 und der Außenzylinder 522 können auch zu verschiedenen, gegeneinander verdrehbaren Dosenteilen gehören.

**Fig. 32** zeigt eine Schnittansicht eines Innenteils mit einem am Kabelabgang 601 des Innenzylinders 602 festgeklemmten Kabelgang 603.

**Fig. 33** zeigt eine Schnittansicht eines Innenteils gemäß Fig. 32 mit einem am Kabelabgang 650 des Innenzylinders 651 festgeklemmten Federelement 652.

Unter fertigungstechnischen Aspekten ist es besonders vorteilhaft, die Federelemente durch Strangextrudieren als Meterware herzustellen, auf eine gewünschte Länge zuzuschneiden und dann in eine Spiralkabeldose einzusetzen. **Fig. 34A** zeigt eine Schnittansicht einer Spiralkabeldose mit einem Innenteil 700 und einem Außenteil 701. An der Kante zwischen der Ringscheibe 702 des Innenteils und dem Außenzylinder 703 sind vom Spritzguß-Herstellungsverfahren herrührende Werkzeug-Trennlöcher oder Trennvertiefungen 704 angeordnet. **Fig. 34B** zeigt ein als Strangextrudierungs-Meterware hergestelltes Federelementeband 710, das Federzungen 711 aufweist, die sich in Längsrichtung des Federelementebandes mit einem vorbestimmten Abstand wiederholen. Ebenso weist das Federelementeband 710 an einer seiner Längsschmalseiten Vorsprünge 712 auf, die geeignet sind, in die Werkzeug-Trennlöcher oder Trennvertiefungen 704 des Innenteils 700 einzugreifen und sich auf diese Weise zu arretieren.

**Fig. 35** zeigt ein als Kappe ausgeführtes Federelement 750, das einen Aufsteckbereich 751 aufweist, mit dem es auf einen Kabelabgangsbereich aufsteckbar ist.

Die **Fig. 36A bis 36C** zeigen Ansichten von verschiedenen als Meterware hergestellten Federelementebändern 800, 801. Die Federelementebänder können aus Kunststoff oder aus elastischem Metall, insbesondere Federstahl, gefertigt sein. Während die **Fig. 36A und 36B** eine Aufsicht auf die Breitseite des Federelementebandes zeigen, gibt **Fig. 36C** eine Sicht auf die Schmalseite wieder.

Wenn ein entsprechend zugeschnittenes Federelementeband derart in eine Spiralkabeldose eingebaut wird, daß es den zur Verfügung stehenden Umfang genau ausfüllt, sind die Stoß- bzw. Verbindungsstellen für die Federelementebänder zweckmäßig auszugestalten. Die **Fig. 37 bis 43** zeigen verschiedene Varianten von Stoß- und Verbindungsstellen für als Meterware hergestellte Federelementebänder.

**Fig. 44** zeigt ein Federelement 900 mit einer Federkralle 901. **Fig. 45** zeigt einen Querschnitt durch einen Federring 910 mit einem aus einem elastischen Material hergestellten ringförmigen Sockel 911 und einem Andrückarm 912. **Fig. 46** zeigt in einer angeschnittenen perspektivischen Darstellung einen aus einem elastischen Material gefertigten Federring 920 mit Andrückarmen 921.

**Fig. 47** zeigt ein Federelement 930 mit zwei Federkrallen 931 und 932.

## Patentansprüche

1. Spiralkabeldose zur Aufnahme einer Kabelspirale, insbesondere einer elektrischen Airbag-Kabelspirale, mit einem ersten Dosenteil und einem zweiten Dosenteil, die relativ zueinander verdrehbar sind und einen ringförmigen Kabelaufnahmeraum einschließen, wobei die Dosenteile Kabeldurchführungen zur Herausführung von in den Kabeldurchführungen gehaltenen Kabelenden der Kabelspirale aus der Dose aufweisen und der Kabelaufnahmeraum radial außenseitig durch eine Außenzylinderwand des ersten Dosenteils und radial innenseitig durch eine Innenzylinderwand des zweiten Dosenteils begrenzt ist, und
einer elastischen Andrückeinrichtung zum Abhalten der Kabelspirale von der Innenzylinderwand mit einer im Bereich der Kabeldurchführung in der Innenzylinderwand auf die Kabelspirale wirkenden Federeinrichtung,
**dadurch gekennzeichnet,**
daß die elastische Andrückeinrichtung (33, 59) beidseitig der Kabeldurchführung (26) auf die Kabelspirale (22) wirkend ausgebildet ist.

2. Spiralkabeldose nach Anspruch 1,
**dadurch gekennzeichnet,**
daß die elastische Andrückeinrichtung (59) ringförmig um die Innenzylinderwand (24) herum ausgebildet ist und mindestens zwei Federeinrichtungen (36, 37) aufweist, die vorzugsweise äquidistant angeordnet sind.

3. Spiralkabeldose nach Anspruch 2,
**dadurch gekennzeichent,**
daß die elastische Andrückeinrichtung (59) aus einem um die Innenzylinderwand (24) herum anordnenbaren Ringeinsatz (64) gebildet ist, dessen Federeinrichtungen aus einstückig mit diesem verbundenen Federzungen (60, 61, 62, 63) bestehen.

4. Spiralkabeldose nach Anspruch 3,
**dadurch gekennzeichnet,**
daß zur Ausbildung mindestens einer Kabeldurchführung im Ringeinsatz (64) mindestens eine Federzunge (60, 61, 61, 62, 63) durch eine zungenförmige Materialausbiegung aus einem Ringbasiskörper (65) des Ringeinsatzes gebildet ist.

5. Spiralkabeldose nach Anspruch 1 oder 2,
**dadurch gekennzeichnet,**
daß die Andrückeinrichtung aus zungenförmigen Materialausbiegungen der Innenzylinderwand (24) gebildet ist.

6. Spiralkabeldose nach einem oder mehreren der vorangehenden Ansprüche,
**dadurch gekennzeichnet,**
daß eine weitere elastische Andrückeinrichtung (66) vorgesehen ist, die zumindest auf einer Seite der in der Außenzylinderwand (25) ausgebildeten Kabeldurchführung (27) wirkend vorgesehen ist.

7. Spiralkabeldose nach Anspruch 6,
**dadurch gekennzeichnet,**
daß die weitere elastische Andrückeinrichtung (66) ringförmig entlang der Außenzylinderwand (25) ausgebildet ist und mit mindestens einer Federeinrichtung (67, 68, 69, 70) versehen ist.

8. Spiralkabeldose nach Anspruch 7,
**dadurch gekennzeichnet,**
daß die weitere elastische Andrückeinrichtung aus einem längs der Außenzylinderwand, innenseitig an dieser anliegenden Ringeinsatz (66) gebildet ist, dessen mindestens eine Federeinrichtung aus einer einstückig mit diesem verbundenen Federzunge (67, 68, 69, 70) besteht.

9. Spiralkabeldose nach Anspruch 8,
**dadurch gekennzeichnet,**
daß zur Ausbildung mindestens einer Kabeldurchführung im Ringeinsatz (66) mindestens eine Federzunge (67, 68, 69, 70) durch eine zungenförmige Materialausbiegung aus einem Ringbasiskörper des Ringeinsatzes (66) gebildet ist.

10. Spiralkabeldose nach Anspruch 6 oder 7,
**dadurch gekennzeichnet,**
daß die Andrückeinrichtung aus mindestens einer zungenförmigen Materialausbiegung der Außenzylinderwand (25) gebildet ist.

11. Spiralkabeldose nach einem oder mehreren der vorangehenden Ansprüche, 2 bis 10
**dadurch gekennzeichnet,**
daß die Federzungen (60 bis 63; 67 bis 70) einer Ringanordnung sich zur Ausbildung einer turbinenradförmigen Anordnung gleichsinnig erstrecken.

12. Spiralkabeldose nach einem oder mehreren der Ansprüche 2 bis 10,
**dadurch gekennzeichnet,**
daß die Federzungen (60 bis 63; 67 bis 70) einer Ringanordnung sich zumindest teilweise wechselsinnig erstrecken.

13. Spiralkabeldose nach Anspruch 1, bei der mindestens ein Kabelende der Kabelspirale abgewinkelt ausgebildet und mit einer Zugentlastungseinrichtung versehen ist,
**dadurch gekennzeichnet,**
daß die elastische Andrückeinrichtung (33) an beiden Seiten der an der Kabeldurchführung (26) angeordneten Zugentlastungseinrichtung (30) vorgesehen ist.

14. Spiralkabeldose nach Anspruch 13,
**dadurch gekennzeichnet,**
daß die Zugentlastungseinrichtung (30) ein mit einem Deckelteil (39) versehenes Kabeldurchführungsbasisteil (38) zum Einsatz in die Kabeldurchführung (26) und zur Aufnahme des abgewinkelten Kabelendes (28) aufweist, wobei eine erste zungenförmige Federeinrichtung (36) mit dem Kabeldurchführungsbasisteil (38) und eine zweite zungenförmige Federeinrichtung (37) mit dem Deckelteil (39) verbunden ist, derart, daß bei auf dem Kabeldurchführungsbasisteil angeordnetem Deckelteil (39) die beidseitig wirkende, elastische Andrückeinrichtung (33) gebildet ist.

15. Spiralkabeldose nach Anspruch 13 oder 14,
**dadurch gekennzeichnet,**
daß die Zugentlastungseinrichtung (30) in ihrem dem Kabeldurchführungsbasisteil (38) gegenüberliegenden Endbereich mit einem Formschlußteil (44) zum formschlüssigen Einsatz in ein Steckverbindergehäuse (56) versehen ist.

16. Spiralkabeldose nach einem oder mehreren der vorangehenden Ansprüche, **dadurch gekennzeichnet,**
daß mindestens eine Federzunge (60 bis 63; 67 bis 70; 36, 37) mit einer Flachkabelzerstörungseinrichtung (77) versehen ist, derart, daß bei Überschreiten einer vorgegebenen Druckbeanspruchung eines Federzungenendes (81) eine mechanische Zerstörung des am Federzungenende (81) anliegenden Flachkabelbereichs (82) erfolgt.

17. Spiralkabeldose nach Anspruch 16,
**dadurch gekennzeichnet,**
daß die Flachkabelzerstörungseinrichtung (77) einen Eindringkörper (84) aufweist, der bei Auslenkung des Federzungenendes (81) gegenüber einer starr mit dem Eindringkörper (84) verbundenen Federzungenbasis (83) in den am Federzungenende (81) anliegenden Flachkabelbereich (82) eindringt.
